# FASCICULE DE BREVET EUROPEEN

(11) **EP 1 894 751 B1**
(45) Date de publication et mention de la délivrance du brevet: **11.03.2009**
(21) Numéro de dépôt: 07014565.1
(22) Date de dépôt: 25.07.2007
(51) Int. Cl.: B60C 23/04

(54) **Procédé de discrimination, lors du roulage d'un véhicule, des roues mobiles en rotation et des roues immobiles en rotation du dit véhicule**
Verfahren zur Unterscheidung von beweglichen Rädern und unbeweglichen Rädern eines Fahrzeugs während der Fahrt
Method of discrimination, when a vehicle is moving, between mobile wheels and fixed wheels

(30) Priorité: 29.08.2006 FR 0607577
(43) Date de publication de la demande: 05.03.2008
(73) Titulaire: Continental Automotive France, 31100 Toulouse (FR)
(72) Inventeur: Costes, Olivier, 31270 Cugnaux (FR)
(74) Mandataire: Bonn, Roman Klemens

(56) Documents cités:
- US-A1- 2005 033 485
- US-A1- 2006 042 368

## Description

L'invention concerne un procédé de discrimination, lors du roulage d'un véhicule, des roues mobiles en rotation et des roues immobiles en rotation du dit véhicule équipées chacune d'un boîtier électronique adapté pour émettre, à destination d'une unité centrale montée sur le véhicule, des signaux représentatifs de paramètres de fonctionnement de la dite roue.

Le document US2006/0042368 A1 décrit, par example, un procédé de discrimination correspondant au préambule de la revendication 1.

De plus en plus de véhicules automobiles possèdent des systèmes de surveillance et/ou de mesures de paramètres comportant des capteurs montés sur le dit véhicule.

A titre d'exemple concernant de tels systèmes, il peut être cité les systèmes de surveillance comportant des capteurs montés sur chacune des roues de véhicules, dédiés à la mesure de paramètres, tels que pression et/ou température des pneumatiques équipant ces roues, et destinés à informer le conducteur de toute variation anormale du paramètre mesuré.

Ces systèmes de surveillance comportent classiquement :
- monté sur chacune des roues du véhicule, un boîtier électronique intégrant les capteurs de mesure, un microprocesseur et un émetteur radiofréquence,
- et, montée sur le véhicule, une unité centrale de réception des signaux émis par les boîtiers électroniques, dotée d'un calculateur intégrant un récepteur radiofréquence connecté à une antenne.

Un des problèmes que nécessitent de résoudre de tels systèmes de surveillance réside dans l'obligation de devoir associer à chaque signal reçu par le récepteur de l'unité centrale, une information concernant la localisation du boîtier électronique et donc de la roue à l'origine de ce signal, cette obligation perdurant pendant la durée de vie du véhicule, c'est à dire devant être respectée même après des changements de roues ou plus simplement des inversions de la position de ces roues.

A ces fins, les systèmes de surveillance doivent être conçus de façon à remplir deux fonctions consistant en :
- une fonction dite usuellement « d'auto-apprentissage », destinée à l'identification des boîtiers électroniques des roues effectivement montées sur le véhicule,
- et une fonction de localisation destinée à la localisation sur le véhicule des boîtiers électroniques identifiés.

A l'heure actuelle, une méthode classique de localisation consiste à émettre, au moyen d'antennes montées sur le véhicule, des signaux LF (basse fréquence), dits signaux de requête d'identification, à destination des boîtiers électroniques, et à commander, en réponse, l'émission, par chacun des dits boîtiers électroniques, à destination de l'unité centrale, d'un signal RF (haute fréquence) comportant un paramètre d'identification de ce dernier.

Le principal avantage d'une telle méthode réside dans le fait que la procédure de localisation est très rapide et peut permettre une localisation quasi-instantanée après le démarrage du véhicule.

La méthode usuelle « d'auto-apprentissage » actuelle consiste, quant à elle, à équiper chaque boîtier électronique d'un capteur d'accélération, et à réaliser la fonction « d'auto-apprentissage » par la mise en oeuvre d'un principe de corrélation entre les valeurs fournies par ces capteurs d'accélération et la vitesse du véhicule.

Le problème majeur d'une telle méthode réside dans le fait qu'elle impose un temps de roulage relativement important avant de fournir une information fiable et exploitable.

En effet, et en premier lieu, compte tenu de la précision des capteurs d'accélération, une vitesse minimale de l'ordre de 20 km/h est requise pour obtenir des valeurs de mesure exploitables. De plus, une fois ce seuil de roulage atteint, un temps de roulage minimal est nécessaire en vue de confirmer la corrélation entre accélération des roues et vitesse du véhicule.

Pour cette raison, et malgré les potentialités en terme de réactivité des méthodes de localisation des roues, les systèmes de surveillance actuels sont inopérants durant un laps de temps variable relativement conséquent après la mise en route d'un véhicule.

La présente invention vise à pallier cet inconvénient et vise à fournir un procédé permettant à un système de surveillance de réaliser la fonction « d'auto-apprentissage » dès les premiers tours de roues d'un véhicule, sans requérir de valeur seuil de vitesse de roulage.

Un autre objectif de l'invention est de fournir un procédé dont la mise en oeuvre est économique, car ne nécessitant qu'une simple adaptation logicielle des systèmes de surveillance actuels.

A cet effet, l'invention vise un procédé de discrimination, lors du roulage d'un véhicule, des roues mobiles en rotation et des roues immobiles en rotation du dit véhicule équipées chacune d'un boîtier électronique adapté pour émettre, à destination d'une unité centrale montée sur le véhicule, des signaux représentatifs de paramètres de fonctionnement de la roue, le dit procédé consistant à émettre des signaux, dits signaux de requête d'identification, à destination des boîtiers électroniques, et à commander, en réponse, l'émission, par chacun des dits boîtiers électroniques, à destination de l'unité centrale, d'un signal comportant un paramètre d'identification de ce dernier.

Selon l'invention, ce procédé consiste, lors de la réception de signaux de requête d'identification par un boîtier électronique, à calculer le taux de réception des dits signaux de requête d'identification, et à déclarer la roue correspondante mobile en rotation si le dit taux de réception est compris entre 10 % et 90%.

Le principe à la base de l'invention a donc été d'exploiter, la présence, lors de la rotation d'une roue, de zones angulaires de non réception, par le boîtier électronique équipant cette roue, des signaux de requête d'identification, les dites zones de non réception étant fonctions de la position de ce boîtier électronique relativement à l'antenne émettant ces signaux.

Sur la base de ce principe, l'invention a consisté à calculer le taux de réception des signaux de requête d'identification et à assimiler :
- un taux de réception compris entre 10 % et 90%, à un positionnement du boîtier électronique successivement dans des zones de non réception et des zones de réception, et donc à une rotation de la roue,
- un taux de réception inférieur à 10 %, c'est-à-dire proche de zéro, à un positionnement continu du boîtier électronique dans une zone de non réception, et donc à une immobilité en rotation de la roue,
- et un taux de réception supérieur à 90 %, c'est-à-dire proche de 100 %, à un positionnement continu du boîtier électronique dans une zone de réception, et donc à une immobilité en rotation de la roue.

Grâce à cette discrimination, l'invention permet donc de sélectionner de façon très rapide et précise les roues effectivement montées sur le véhicule (roues rotatives), et d'écarter lors de la procédure de localisation, les autres roues embarquées dans le véhicule, telles que roue de secours, train de roues non montées pour la circulation hivernale...

Par conséquent, l'invention permet de réaliser la fonction « d'auto-apprentissage » dès les premiers tours de roues d'un véhicule, sans requérir de valeur seuil de vitesse de roulage.

Il est également à noter que le procédé selon l'invention s'avère très performant du point de vue économique du fait que, d'une part, il ne nécessite pas de capteur de déplacement en vue de sa mise en oeuvre, et que, d'autre part, cette mise en oeuvre requiert une simple adaptation logicielle du système de surveillance du véhicule.

D'autres caractéristiques buts et avantages de l'invention ressortiront de la description détaillée qui suit en référence aux dessins annexés qui en représentent à titre d'exemple non limitatif un mode de réalisation préférentiel. Sur ces dessins :
- la figure 1 est une vue de dessus schématique d'un véhicule doté d'un système de surveillance adapté à la mise en oeuvre du procédé de discrimination selon l'invention,
- et les figures 2a, 2b et 3a, 3b sont quatre graphiques destinés à illustrer le procédé de discrimination conforme à l'invention, et représentent notamment des exemples de taux de réception d'une roue rotative (figure 2b) et d'une roue non rotative (figures 3a et 3b).

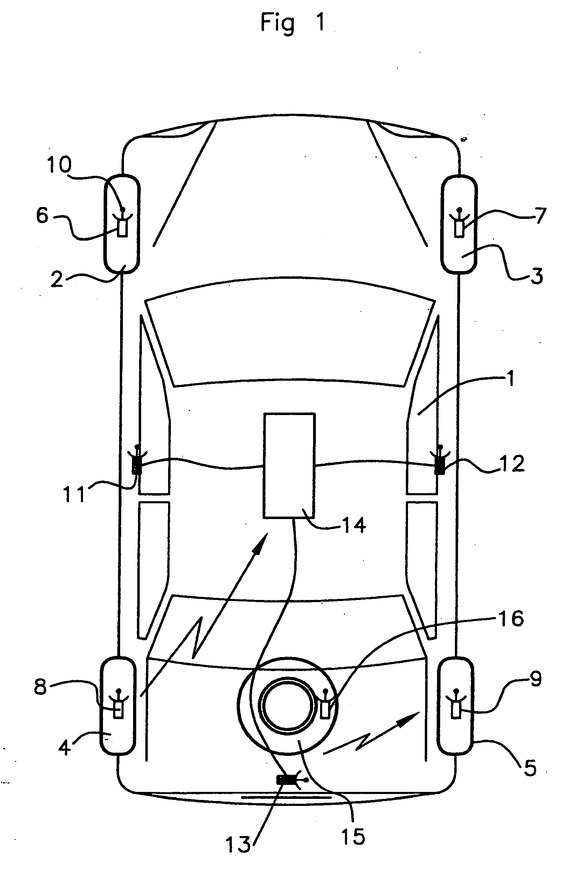

Le procédé de discrimination selon l'invention est conçu pour réaliser la fonction « d'auto-apprentissage » d'un système de surveillance tel que celui représenté à la figure 1, équipant un véhicule 1 muni de :
- quatre roues montées sur les essieux du véhicule 1 et consistant en deux roues avant 2, 3 et deux roues arrière 4, 5
- et une roue de secours 15 en l'exemple disposée dans ou sous le coffre du véhicule 1.

De tels systèmes de surveillance comportent classiquement, en premier lieu, associé à chaque roue 2-5, 15, un boîtier électronique 6-9, 16, par exemple solidarisé sur la jante de la dite roue de façon à être positionné à l'intérieur de l'enveloppe du pneumatique.

Chacun de ces boîtiers électroniques 6-9, 16 intègre, par exemple, des capteurs dédiés à la mesure de paramètres, tels que pression et/ou température du pneumatique, connectés à un microprocesseur possédant un code d'identification du dit boîtier, et relié à un émetteur RF (haute fréquence) connecté à une antenne telle que 10 haute fréquence.

Le système de surveillance comprend, également, un calculateur centralisé ou unité centrale 14 comportant un microprocesseur et intégrant un récepteur RF apte à recevoir les signaux émis par les boîtiers électroniques.

De façon usuelle, un tel système de surveillance et notamment son unité centrale 14 sont conçus de façon à informer le conducteur de toute variation anormale des paramètres mesurés par les capteurs associés aux roues 2-5.

Ce système de surveillance comprend également des antennes émettrices 11-13 connectées à l'unité centrale 14 et disposées chacune à proximité d'une paire de roues gauche 2, 4, droite 3, 5, ou arrière 4, 5.

Selon l'exemple de réalisation représenté à la figure 1, ces antennes émettrices 11-13 sont constituées d'antennes d'un dispositif usuellement connu sous l'appellation « dispositif d'accès mains libres », adapté pour permettre d'accéder au véhicule 1 et éventuellement de démarrer ce dernier grâce à l'identification d'un badge électronique.

Conformément aux dispositions d'un tel dispositif d'accès mains libres, ces antennes peuvent être, tel que représenté à la figure 1, au nombre de trois, et consister respectivement en :
- une antenne gauche 11 positionnée sur la poignée de la porte avant gauche du véhicule, adaptée pour présenter une zone de couverture dans laquelle sont situées la roue avant gauche 2 et la roue arrière gauche 4 du véhicule 1,
- une antenne droite 12 positionnée sur la poignée de la porte avant droite du véhicule, adaptée pour présenter une zone de couverture dans laquelle sont situées la roue avant droite 3 et la roue arrière droite 5 du véhicule 1,
- et une antenne arrière 13 positionnée sur la poignée de la porte du coffre du véhicule 1, adaptée pour présenter une zone de couverture dans laquelle sont situées, d'une part, la roue arrière gauche 4 et la roue arrière droite 5, et d'autre part la roue de secours 15 du véhicule 1.

Selon l'invention, l'unité centrale 14 est programmée pour calculer le taux de réception des signaux de requête d'identification émis par l'intermédiaire des antennes 11-13. Pour ce faire, l'unité centrale sait combien de messages ont été émis par ces antennes et un compteur (non représenté) implanté au niveau des boîtiers électroniques compte le nombre de messages effectivement reçus par les boîtiers électroniques. Ce nombre de message reçus est transmis à l'unité centrale. L'unité centrale n'a plus, alors, qu'à calculer, sur la base de ces informations, le taux de réception. Bien entendu, en variante ce calcul peut être effectué directement par chacun des boîtiers électroniques 6-9, 16. Dans ce cas le nombre de messages émis par les antennes 11-13 est prédéterminé et il suffit qu'un compteur implanté au niveau des boîtiers électronique compte le nombre de messages effectivement reçus pour déterminer automatiquement le taux de réception.

Concernant chaque roue 2-5 montée sur les essieux, la rotation de cette dernière, et donc celle du boîtier électronique 6-9 associé, conduit à l'apparition de zones angulaires de non réception, par le dit boîtier électronique, des signaux émis par la ( ou les) antenne(s) présentant une zone de couverture dans laquelle est située la roue 2-5.

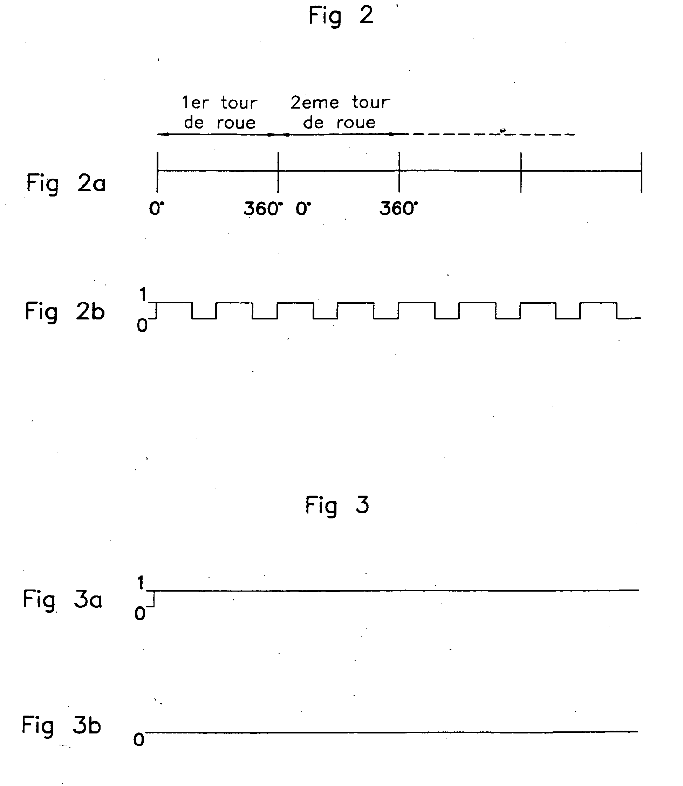

L'existence de ces zones de non réception ressort de l'analyse des figures 2a et 2b qui illustrent les résultats de mesures de réception, par un boîtier électronique 7 monté sur une roue avant droite 3 d'un véhicule 1, des signaux électromagnétiques émis par une antenne 12 montée sur la poignée de la porte avant droite de ce véhicule. En vue de cette illustration, ces figures représentent respectivement, en projection sur un axe horizontal :
- la trajectoire parcourue par un boîtier électronique monté sur une roue, (figure 2a),
- et les zones correspondantes (niveau 0 du signal représenté à la figure 2b) de non réception par ce boîtier électronique des signaux électromagnétiques émis par l'antenne.

Il ressort clairement de ces figures que le boîtier électronique objet du test effectué, se trouve successivement situé dans des zones de non réception et des zones de réception des signaux émis par l'antenne chargée d'émettre les signaux de requête d'identification à destination du dit boîtier.

Le taux de réception représentant une image du pourcentage zones de réception/ zones de non réception sur un tour de roue, le taux de réception des roues rotatives 2-5 va ainsi varier dans une plage de valeurs de l'ordre de 50% à 80%.

Par contre, concernant la roue de secours 15 ou toute roue immobile en rotation, le taux de réception est uniquement fonction de la position « fixe » du boîtier électronique 16 relativement à l'antenne émettrice 13. De ce fait :
- soit le boîtier électronique 16 se trouve dans une zone favorable de réception, tel qu'illustré à la figure 3a, et le taux de réception est alors proche de 100 %, en pratique supérieur à 90 %,
- soit le boîtier électronique 16 se trouve dans une zone de non réception, tel qu'illustré à la figure 3b, et le taux de réception est alors proche de 0 %, en pratique inférieur à 10 %.

Par conséquent, le procédé de discrimination selon l'invention permet, grâce à des calculs de taux de réception, de réaliser la fonction « d'auto-apprentissage » dès les premiers tours de roues d'un véhicule 1, sans requérir de valeur seuil de vitesse de roulage.

## Revendications

1. Procédé de discrimination, lors du roulage d'un véhicule (1), des roues mobiles en rotation (2-5,) et des roues immobiles en rotation (15) du dit véhicule équipées chacune d'un boîtier électronique (6-9, 16) adapté pour émettre, à destination d'une unité centrale (14) montée sur le véhicule (1), des signaux représentatifs de paramètres de fonctionnement de la roue (2-5, 15), le dit procédé consistant à émettre des signaux, dits signaux de requête d'identification, à destination des boîtiers électroniques (6-9, 16), et à commander, en réponse, l'émission, par chacun des dits boîtiers électroniques, à destination de l'unité centrale (14), d'un signal comportant un paramètre d'identification de ce dernier, et le dit procédé se **caractérisant en ce qu**'il consiste, lors de la réception de signaux de requête d'identification par un boîtier électronique (6-9, 16), à calculer le taux de réception des dits signaux de requête d'identification, et à déclarer la roue correspondante mobile en rotation si le dit taux de réception est compris entre 10% et 90%.

## Claims

1. Method of distinguishing, whilst a vehicle (1) is being driven, between the rotating wheels (2-5) and the non-rotating wheels (15) of said vehicle, each wheel being fitted with an electronic module (6-9, 16) designed to transmit signals representative of operating parameters of the wheel (2-5, 15) to a central processing unit (14) mounted on the vehicle (1), said method consisting in transmitting signals, called identification request signals, to the electronic modules (6-9, 16) and in initiating, in response, the transmission, by each of said electronic modules, of a signal that includes a parameter for identifying said signal to the central processing unit (14), and said method being **characterised in that** it consists, upon reception of the identification request signals by an electronic module (6-9, 16), in calculating the reception rate of said identification request signals and in indicating that the corresponding wheel is rotating if said reception rate is between 10% and 90%.

## Patentansprüche

1. Verfahren zur Unterscheidung der drehbeweglichen Räder (2 bis 5) und der nicht drehbeweglichen Räder (15) eines Fahrzeugs (1) während der Fahrt, die jeweils mit einem Elektronikgehäuse (6 bis 9, 16) ausgestattet sind, das dafür eingerichtet ist, Signale, die für Funktionsparameter des Rads (2 bis 5, 15) kennzeichnend sind, an einen Prozessor (14) zu senden, der am Fahrzeug (1) angebracht ist, wobei das Verfahren darin besteht, Signale, so genannte Identifikationsanforderungssignale, an die Elektronikgehäuse (6 bis 9, 16) zu senden und als Reaktion darauf die Übertragung eines Signals, das einen Identifikationsparameter für das jeweilige Elektronikgehäuse umfasst, von jedem der Elektronikgehäuse an den Prozessor (14) zu steuern, und wobei das Verfahren **dadurch gekennzeichnet ist, dass** es darin besteht, beim Empfang von Identifikationsanforderungssignalen durch ein Elektronikgehäuse (6 bis 9, 16) die Empfangsquote dieser Identifikationsanforderungssignale zu berechnen und das entsprechende Rad als drehbeweglich anzugeben, wenn diese Empfangsquote zwischen 10% und 90% liegt.
